# EUROPÄISCHE PATENTSCHRIFT

(11) **EP 2 300 193 B1**
(45) Veröffentlichungstag und Bekanntmachung des Hinweises auf die Patenterteilung: **14.01.2015**
(21) Anmeldenummer: 08773544.5
(22) Anmeldetag: 20.06.2008
(51) Int. Cl.: B23K 26/03, B23K 26/12, B23K 26/38, B23K 26/08, G01N 21/17

(54) **LASERBEARBEITUNGSMASCHINE MIT EINEM PHOTOAKUSTISCH-MESSKOPF IN DER EINE GASATMOSPHÄRE ENTHALTENDEN STRAHLFÜHRUNG**
LASER MACHINING CENTER HAVING A PHOTO-ACOUSTIC MEASURING HEAD IN THE BEAM GUIDE CONTAINING A GAS ATMOSPHERE
MACHINE D'USINAGE AU LASER PRESENTANT UNE TETE DE MESURE PHOTOACOUSTIQUE DANS LE GUIDAGE DE FAISCEAU CONTENANT UNE ATMOSPHERE GAZEUSE

(43) Veröffentlichungstag der Anmeldung: 30.03.2011
(73) Patentinhaber: TRUMPF Werkzeugmaschinen GmbH + Co. KG, 71254 Ditzingen (DE)
(72) Erfinder: HAMMANN, Gerhard, 70825 Korntal-Münchingen (DE); RITTER, Ulrich, 70435 Stuttgart (DE); FEY, Dirk, 67630 Neewiller (FR); SANFELICI, Giovanni, 76137 Karlsruhe (DE); KRIEG, Gunther, 76227 Karlsruhe (DE)
(74) Vertreter: Kohler Schmid Möbus
(86) Internationale Anmeldenummer: PCT/EP2008/004983
(87) Internationale Veröffentlichungsnummer: WO 2009/152836

(56) Entgegenhaltungen:
- DE-A1- 10 200 349
- JP-A- 5 212 575
- US-A- 5 673 114
- US-A1- 2005 061 778

## Beschreibung

Die Erfindung betrifft eine Laserbearbeitungsmaschine zur Bearbeitung von Werkstücken, mit einer eine Gasatmosphäre enthaltenden Strahlführung für einen zur Werkstückbearbeitung dienenden Laserstrahl sowie mit einer Vorrichtung ("Untersuchungsvorrichtung") zur Untersuchung der Gasatmosphäre in der Strahlführung mithilfe des photoakustischen Effekts auf Verunreinigungen, wobei die Untersuchungsvorrichtung eine Messkammer umfasst, welche Gasatmosphäre der Strahlführung sowie einen bezüglich seiner Leistung modulierten Laserstrahl enthält und wobei die Untersuchungsvorrichtung außerdem wenigstens einen Messkopf aufweist, mittels dessen der photoakustische Effekt in der Messkammer detektierbar ist, siehe Oberbegriff des Anspruchs 1.

An einer Laserbearbeitungsmaschine mit einem CO₂-Laser wird die Laserstrahlung zur Materialbearbeitung durch Molekülschwingungen erzeugt. Üblicherweise wird die erzeugte Laserstrahlung durch eine Gasatmosphäre geführt, die mit gezielten Maßnahmen frei von Stoffen gehalten wird, welche die erzeugte Laserstrahlung absorbieren können.

Die CO₂-Laserstrahlung wird von vielen Molekülen mehr oder weniger stark absorbiert. Voraussetzung für die Absorption ist es, dass eine der Molekülbindungen die passende Bindungsenergie besitzt. Beispiele für solche gasförmigen Stoffe, welche von der Strahlführung ferngehalten werden müssen, sind SF₆, C₂H₄, halogenierte Kohlenwasserstoffe, Ammoniak, Alkohole, Aceton, CO₂.

Vordergründig besteht die schädigende Wirkung dieser Gase in der Absorption an sich und in einer damit verbundenen Schwächung der zur Bearbeitung notwendigen Leistung der Laserstrahlung. Der eigentlich schädliche Effekt besteht in der aus der Absorption resultierenden optischen Wirkung auf die Laserstrahlung, welche in einer Strahlaufweitung und einer Verzerrung der Phasenfront besteht. Durch eine Temperaturerhöhung und durch die dadurch bedingte Änderung des Brechungsindex wird die Laserstrahlung negativ beeinflusst.

Untersuchungen haben ergeben, dass eine Verunreinigung von < 100 ppb (0,1 ppm) SF₆ ausreicht, um das Schneiden von Stahlblech mit 3 kW Laserleistung entscheidend zu beeinträchtigen. SF₆ zeigt bei einer Wellenlänge von 10 µm die stärkste bekannte Absorption.

Mithilfe des photoakustischen Effekts können die Verunreinigungen in der Strahlführung einer Laserbearbeitungsmaschine detektiert werden. Die Messung des photoakustischen Effekts ist durch L.B. Kreutzer:"Laser opto-acoustic spectroscopy - A new technique of gas analysis", Anal. Chem. 46 239A, 1974, bekannt geworden. Das Messverfahren basiert darauf, dass die Wechselwirkung einer modulierten elektromagnetischen Welle mit bestimmten Molekülen Schall erzeugt, der sehr einfach mit einem Mikrofon gemessen werden kann.

Eine gattungsgemäße Laserbearbeitungsmaschine ist offenbart in EP 1 386 690 A1 sowie in DE 102 00 349 A1, die als nächstliegenden Stand der Technik angesehen wird. In diesen Druckschriften wird vorgeschlagen, einen Teil der zur Laserbearbeitung vorgesehenen Laserstrahlung auszukoppeln und in eine separate Messzelle zu führen, in welcher das zu analysierende Gas mithilfe des photoakustischen Effekts auf Verunreinigungen untersucht werden kann.

Gattungsfremder Stand der Technik ist bekannt aus DE 10 2005 033 408 A1 sowie aus US 2001/0026354 A1. Diese Druckschriften betreffen Belichtungsanlagen, mittels derer Strukturen durch Belichtung auf ein Substrat aufgebracht werden. Zu diesem Zweck vorgesehen ist eine Lichtquelle, vorzugsweise ein Laser, von der beziehungsweise von dem aus Licht zu dem Substrat hin abgestrahlt wird. Zwischen der Lichtquelle und dem Substrat sind lichtquellenseitig eine mit der aufzubringenden Struktur versehene Maske und substratseitig ein optisches Abbildungssystem angeordnet. Das optische Abbildungssystem umfasst ein Gehäuse sowie mehrere in dessen Innern angeordnete optische Linsen. Das Gehäuse des optischen Abbildungssystems wird mit Gas durchspült, um Verunreinigungen abzuführen, die ansonsten die Funktionsfähigkeit des optischen Abbildungssystems beeinträchtigen würden. Vorrichtungen zur Untersuchung der Zusammensetzung des Spülgasstromes können wahlweise im Innern oder außerhalb des Gehäuses des optischen Abbildungssystems angeordnet werden. Der photoakustische Effekt wird von den vorbekannten Untersuchungsvorrichtungen nicht genutzt.

WO 2007/004168 A1 beschreibt ein photoakustisches Spektrometer, das zur Detektion von Verunreinigungen in Luftproben eingesetzt werden kann.

Durch die DE 195 35 720 A1 sind ein Verfahren und eine Anordnung zur Dichtheitsprüfung von Gehäusen bekannt geworden, bei welchen ein austretendes Gas durch ein Lichtbündel einer abgestimmten Lichtquelle derart beleuchtet wird, dass bei Existenz einer Undichtigkeit des Gehäuses der photoakustische Effekt gemessen werden kann. Zur Verbesserung der Messung wird ein Rückkopplungskreis vorgeschlagen.

Zur Einstellung der Gasatmosphäre in Strahlführungen sind die Verwendung eines Molekülsiebs (siehe beispielsweise EP 0 749 800 A1) oder der Einsatz von Stickstoff als Spülgas für die Strahlführung (siehe beispielsweise WO 95/33594 A1) bekannt.

Zum Stand der Technik gehören auch Abschirmungen gegen einen Gaseintritt von außen.

Der Erfindung liegt die Aufgabe zu Grunde, die Überwachung der Gasatmosphäre im Innern der Strahlführung einer Laserbearbeitungsmaschine zu vereinfachen.

Diese Aufgabe wird erfindungsgemäß durch eine Laserbearbeitungsmaschine nach Patentanspruch 1 gelöst. Die Strahlführung der erfindungsgemäßen Laserbearbeitungsmaschine ist als Messkammer vorgesehen und enthält den bezüglich seiner Leistung modulierten Laserstrahl. Der Messkopf zur Schalldetektion ist in die Strahlführung integriert, indem er in die Strahlführung eingebaut ist oder indem er in einem Fenster der Strahlführung angeordnet ist. Beide Alternativen ermöglich eine direkte Messung des photoakustischen Effekts in der als Mess-kammer genutzten Strahlführung. In Fällen, in denen die Strahlführung mit einem Entlüftungs- bzw. Druckablassventil versehen ist, hat es sich als besonders zweckmäßig erwiesen, den Messkopf in unmittelbarer Nähe des genannten Ventils anzuordnen. Bei einer derartigen Anordnung des Messkopfes spiegelt der gemessene photoakustische Effekt besonders zuverlässig die tatsächlichen Verhältnisse in der Gasatmosphäre in der Strahlführung wieder. Gemeinsam mit einer mit dem Lasergenerator der Laserbearbeitungsmaschine verbundenen Steuerungs- und Auswerte-Einheit bildet der Messkopf Mittel zur Untersuchung der Gasatmosphäre in der Strahlführung. Die Steuerungs- und Auswerte-Einhelt bewirkt eine Modulation der Laserleistung derart, dass mittels des In die Strahlführung integrierten Messkopfs aufgrund der Leistungsänderung der photoakustische Effekt in der Strahlführung detektierbar ist

Die erfindungsgemäße In situ-Gassensorik für Strahlführungssysteme auf Basis der Photoakustik ermöglicht den direktesten Nachweis von relevanten Verunreinigungen der Gasatmosphäre in der Strahlführung. Zum Unterschied von bekannten Lösungen stellt die Strahlführung selbst die Messkammer dar. Der Lasergenerator erzeugt nicht nur den Laserstrahl für die Werkstückbearbeitung sondern auch den Messstrahl für die durchzuführende photoakustische Messung. Infolgedessen ist eine separate Strahlquelle zur Erzeugung des Messstrahls nicht erforderlich. Die photoakustische Messung kann während der Hauptzeit, d.h. während der Werkstückbearbeitung, aber auch in Nebenzeiten durchgeführt werden. Eine Messung während der Hauptzeit kommt dann in Frage, wenn die Werkstückbearbeitung mittels eines leistungsmodulierten Laserstrahls erfolgt, wie er für die Durchführung der Messung benötigt wird. Leistungsmodulierte Laserstrahlen dieser Art dienen beispielsweise bei der schneidenden Blechbearbeitung zum Einstechen in das zu bearbeitende Blech. Als Nebenzeiten zur Durchführung der Messung des photoakustischen Effekts bieten sich beispielsweise Zeiten an, in denen die Antriebsachsen der Laserbearbeitungsmaschine geschmiert werden und/oder in denen die Abstandsregelung justiert wird, welche dazu dient, während der Werkstückbearbeitung einen definierten Abstand zwischen dem Laserbearbeitungskopf und dem zu bearbeitenden Werkstück beizubehalten. Bei Durchführung der Messung während einer Nebenzeit kann der Laserbearbeitungskopf, durch welchen der Laserstrahl in den Arbeitsraum austritt, insbesondere numerisch gesteuert in eine definierte Position verfahren werden, in welcher er mit einer Einrichtung zur Absorption des Messstrahls zusammenwirkt. Als Strahlabsorber können u. a. Einrichtungen verwendet werden, wie sie als Sicherheitseinrichtungen bereits gebräuchlich sind und die als solche dazu dienen, Laserstrahlen aufzufangen und die Strahlleistung in von dem Strahlabsorber abzuführende Wärme umzuwandeln. Derzeit eingesetzt werden derartige Strahlabsorber beispielsweise am Auskoppelspiegel von Laserresonatoren.

Bevorzugtermaßen steht die Steuerungs- und Auswerte-Einheit mit der Maschinensteuerung der Laserbearbeitungsmaschine in Verbindung. Werden starke Verunreinigungen detektiert, so kann die Maschinensteuerung entsprechend, beispielsweise durch Abschalten der Laserbearbeitung, reagieren. Außerdem ist es denkbar, dass die Feststellung einer über einem gewissen Grenzwert liegenden Verunreinigung der Gasatmosphäre in der Strahlführung einen Spülvorgang auslöst, im Rahmen dessen der Strahlführungsraum mit Gas der gewünschten Zusammensetzung gespült wird. Unter diesen Umständen ist eine gegenüber einer herkömmlichen Permanentspülung der Strahlführung reduzierte Permanentspülung ausreichend, um in dem Strahlführungsraum der Laserbearbeitungsmaschine eine Gasatmosphäre mit der gewünschten Zusammensetzung bereitzustellen.

Es ist auch denkbar, dass auf eine Permanentspülung der Strahlführung vollständig verzichtet werden kann.

Im Interesse eines einfachen Aufbaus der Messanordnung wird wenigstens ein Messkopf in Form eines einfachen Mikrophons verwendet. Erfindungsgemäß bevorzugt werden Mikrophonarrays, die eine Mehrzahl von Mikrophonen umfassen.

Der oder die in die Strahlführung integrierten Messköpfe erzeugen ein Ausgangssignal, welches die Steuerungs- und Auswerte-Einheit bei Lasermodulationsfrequenz betrachtet. Dadurch wird eine Differenzierung zwischen Messeffekt und Umgebungsgeräusch erreicht.

Nachfolgend wird die Erfindung anhand beispielhafter schematischer Darstellungen näher erläutert. Es zeigen:
- Figur 1: eine dreidimensionale Darstellung einer Laserbearbeitungsmaschine;
- Figur 2: einen vergrößerten Ausschnitt einer Strahlführung erster Bauart der Laserbearbeitungsmaschine nach Figur 1.
- Figur 3: einen vergrößerten Ausschnitt einer Strahlführung zweiter Bauart der Laserbearbeitungsmaschine nach Figur 1.

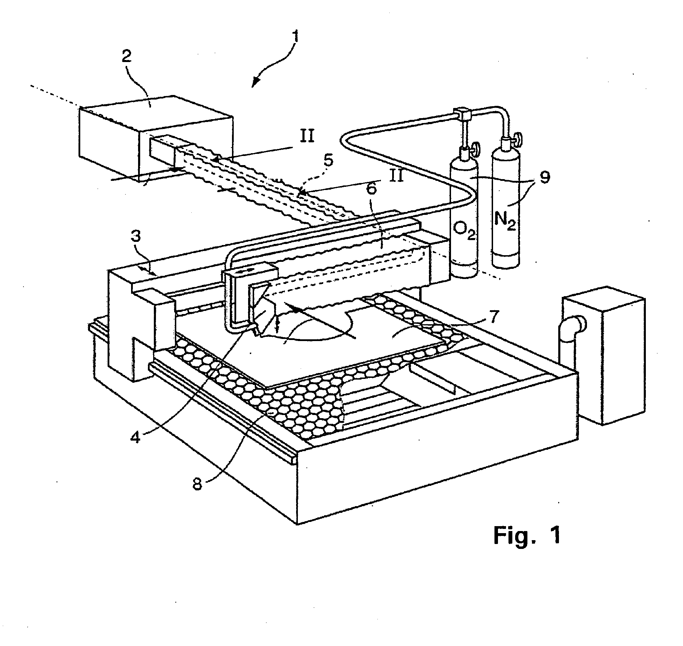

Gemäß Fig. 1 umfasst eine Laserbearbeitungsmaschine 1 einen Lasergenerator 2 (CO₂-Laser) sowie einen relativ dazu in Richtung des Doppelpfeils 3 bewegbaren Laserbearbeitungskopf 4. Ein mittels des Lasergenerators 2 erzeugter Laserstrahl 5 wird ausgehend von dem Lasergenerator 2 durch einen als Strahlführung dienenden und mit einem Gas gespülten Strahlführungsraum 6 zu dem Bearbeitungskopf 4 geleitet und an diesem auf ein zu bearbeitendes Werkstück 7 in Form eines Blechs gelenkt, das auf einer Werkstückauflage 8 der Laserbearbeitungsmaschine 1 abgelegt ist.

Sowohl das Einstechen als auch das Laserschneiden werden durch Hinzufügen eines Gases unterstützt. Als Schneidgase 9 können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden. Schneidgas wird im Bearbeitungskopf in der Nähe der Bearbeitungsstelle zugeführt.

Der Strahlführungsraum 6 ist im Wesentlichen mit reinem Gas, z.B. Stickstoff, gefüllt. Der Strahlführungsraum 6 wird von einem Faltenbalg oder einem sonstigen hermetischen Abschluss (auch ein Rohr, Teleskoprohr usw.) begrenzt.

Der Laserstrahl 5 wird innerhalb des Laserbearbeitungskopfes 4 umgelenkt und fokussiert, so dass ein fokussierter Laserstrahl auf das Werkstück gelenkt wird.

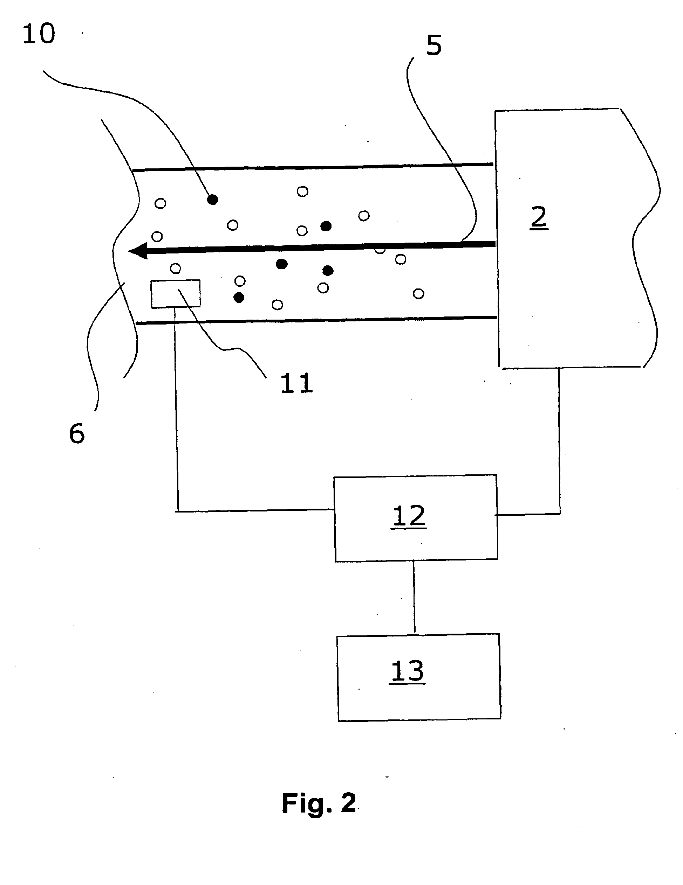

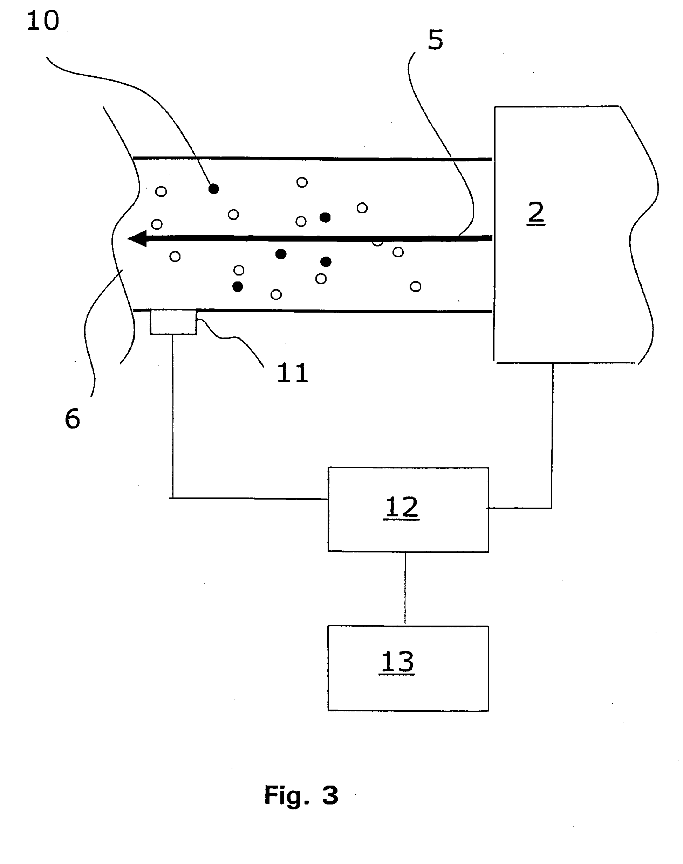

Wie in den Figuren 2 und 3 veranschaulicht, kann der Laserstrahl 5 mit bestimmten Molekülen 10 in dem Strahlführungsraum 6 in Wechselwirkung treten. Dies kann zu einer Leistungsabsorption und üblicherweise zu einer Strahlaufweitung führen. Veränderungen der Fokussierbedingungen wiederum haben direkte Auswirkung auf das Bearbeitungsergebnis beim Laserschneiden.

Aus diesem Grund werden Strahlführungssysteme gekapselt und mit gereinigter Druckluft oder inertem Gas (Stickstoff, CO₂-freie Druckluft) gespült. Dies führt zu einer nicht unrelevanten Erhöhung der Betriebskosten. Werden jedoch unbewusst verunreinigte Spülgase zugeführt, oder dringen über Leckstellen Störgase ein, wird dies normalerweise nicht erkannt und eine Fehlersuche ist aufwändig.

Daher ist eine Vorrichtung zur Untersuchung der Gasatmosphäre in dem Strahlführungsraum 6 auf Verunreinigungen vorgesehen. Diese Vorrichtung nutzt den photoakustischen Effekt und umfasst den Strahlführungsraum 6 als Messkammer. Außerdem umfasst die Vorrichtung zur Untersuchung der Gasatmosphäre in dem Strahlführungsraum 6 eine Sensorik, die direkt den Belastungsgrad der Gasatmosphäre in dem Strahlführungsraum 6 detektiert. Die Sensorik ist im Wesentlichen durch einen Messkopf 11 für Schall, wie beispielsweise ein Mikrofon, und eine Steuerungs- und Auswerte-Einhelt 12 ausgebildet, die sowohl mit dem Lasergenerator 2 als auch mit einer Maschinensteuerung 13 in Verbindung steht.

Es sind jegliche sicherheitstechnische, steuerungstechnische und/oder bedienungstechnische Maßnahmen der Maschinensteuerung 13 als Reaktion auf ein Signal der Steuerungs- und Auswerte-Einheit 12 denkbar. Beispielsweise kann die Maschinensteuerung 13 einen Warnhinweis für den Bediener der Laserbearbeitungsmaschine 1 generieren. Je nach Verunreinigungsgrad des Strahlführungsraumes 6 ist auch eine automatische Abschaltung der Laserbearbeitungsmaschine 1 möglich. Alternativ können Kompensationsmaßnahmen eingeleitet werden, wie beispielsweise eine Erhöhung der Spüigasmenge. Das Signal der Steuerungs- und Auswerte-Einheit 12 kann auch für einen Regelkreis verwendet werden, um die Gasatmosphäre in dem Strahlführungsraum 6 zu kontrollieren.

Die Sensorik der Messanordnung kann an beliebiger Stelle des Strahlführungsraumes 6 angeordnet werden. Gemäß Figur 2 befindet sich der Messkopf 11 im Innern des Strahlführungsraumes 6. Figur 3 zeigt den Messkopf 11 in einem Fenster des Strahlführungsraumes 6.

Die Messung kann sowohl während der Werkstückbearbeitung und dann an demjenigen Laserstrahl durchgeführt werden, der letztendlich nach Passieren des nicht dargestellten Laserbearbeitungskopfes der Laserbearbeitungsmaschine 1 zur Werkstückbearbeitung eingesetzt wird. Alternativ besteht die Möglichkeit, die Messung während einer Nebenzeit durchzuführen. Insbesondere in dem letztgenannten Fall kann der Lasergenerator in einen Betriebsmodus überführt werden, der für die Messung des auftretenden photoakustischen Effekts besonders zweckmäßig ist. Als vorteilhaft hat sich eine Leistungsmodulation mit einem PulsPause-Verhältnis von 1:1 bei einer Frequenz der Pulsung von 6 bis 8kHz erwiesen. Je größer die Maximalleistung (Pulshöhe) ist, desto stärker ist das erzeugte Messsignal.

Zur Modulation der Laserleistung dient gemäß der Erfindung die Steuerungs- und Auswerte-Einheit 12.

Bei ausreichend großen Leistungsänderungen (z.B. > 1 kW) bei der Modulation ist die Anregung der Verunreinigung der Gasatmosphäre in dem Strahlführungsraum 6 so stark, dass der Schall direkt an dem Strahlführungsraum 6 gemessen werden kann. Es wird keine separate Messkammer benötigt. Die Verunreinigung der Gasatmosphäre in dem Strahlführungsraum 6 führt zu einer linienförmigen Schallquelle entlang des Laserstrahls 5.

Ein oder mehrere Mikrofone beziehungsweise Messköpfe 11 messen die Schallleistung der linienförmigen Schallquelle. Das Ausgangssignal der Messköpfe 11 wird vorzugsweise im Frequenzbereich betrachtet (z.B. durch Digitalisierung und Durchführung einer Fouriertransformation). Um eine Differenzierung zwischen Messeffekt und Umgebungsgeräusch zu erreichen, wird das Signal bei Lasermodulationsfrequenz betrachtet. Die Amplitude bei dieser Frequenz entspricht dem Grad der Verunreinigung.

## Patentansprüche

1. Laserbearbeitungsmaschine zur Bearbeitung von Werkstücken (7), mit einem einem Laserstrahl erzwingenden Lasergenerator (12), einer eine Gasatmosphäre enthaltenden Strahlführung (6) für einen zur Werkstückbearbeitung dienenden Laserstrahl (5) sowie mit einer Vorrichtung ("Untersuchungsvorrichtung") zur Untersuchung der Gasatmosphäre in der Strahlführung (6) mithilfe des photoakustischen Effekts auf Verunreinigungen, wobei die Untersuchungsvorrichtung eine Messkammer umfasst, die Gasatmosphäre der Strahlführung (6) sowie einen bezüglich seiner Leistung modulierten Laserstrahl enthält und wobei die Untersuchungsvorrichtung außerdem wenigstens einen Messkopf (11) aufweist, mittels dessen der photoakustische Effekt in der Messkammer detektierbar ist, **dadurch gekennzeichnet, dass** die Strahlführung (6) als Messkammer vorgesehen ist und den bezüglich seiner Leistung modulierten Laserstrahl enthält, dass der Messkopf (11) in die Strahlführung (6) integriert ist, indem der Messkopf (11) in die Strahlführung (6) eingebaut ist oder indem der Messkopf (11) in einem Fenster der Strahlführung (6) angeordnet ist und dass der in die Strahlführung (6) eingebaute oder in einem Fenster der Strahlführung (6) angeordnete Messkopf (6) gemeinsam mit einer Steuerungs- und Auswerte-Einhelt (12), die mit einem den bezüglich seiner Leistung modulierten Laserstrahl erzeugenden Lasergenerator (2) der Laserbearbeitungsmaschine verbunden ist, Mittel zur Untersuchung der Gasatmosphäre in der Strahlführung (6) ausbildet, wobei die Steuerungs- und Auswerte-Einheit (12) Mittel zur Modulation der Laserleistung des Lasergenerators (12) aufweist, so dass mittels des in die Strahlführung (6) integrierten Messkopfs (11) aufgrund der Leistungsänderung der photoakustische Effekt in der Strahlführung (6) detektierbar ist.

2. Laserbearbeitungsmaschine nach Anspruch 1, **dadurch gekennzeichnet, dass** die Steuerungs- und Auswerte-Einheit (12) mit einer Maschinensteuerung (13) der Laserbearbeitungsmaschine in Verbindung steht.

3. Laserbearbeitungsmaschine nach einem der vorhergehenden Ansprüche, **dadurch gekennzeichnet, dass** der Messkopf (11) durch ein Mikrophon ausgebildet ist.

4. Laserbearbeitungsmaschine nach einem der vorhergehenden Ansprüche, **dadurch gekennzeichnet, dass** der Messkopf (11) ein Ausgangssignal erzeugt, welches die Steuerungs- und Auswerte-Einheit (12) bei Lasermodulationsfrequenz betrachtet.

## Claims

1. Laser processing machine for processing workpieces (7), having a laser generator (2) which produces a laser beam, and having a beam guide (6) which contains a gas atmosphere, for a laser beam (5) which is used for workpiece processing and having a device ("examination device") for examining the gas atmosphere in the beam guide (6) for impurities using the photoacoustic effect, the examination device comprising a measurement chamber which contains gas atmosphere of the beam guide (6) and a laser beam which is modulated with respect to the power thereof and the examination device further having at least one measurement head (11) by means of which the photoacoustic effect in the measurement chamber can be detected, **characterised in that** the beam guide (6) is provided as the measurement chamber and contains the laser beam which is modulated with respect to its power, **in that** the measurement head (11) is integrated in the beam guide (6) by the measurement head (11) being fitted in the beam guide (6) or by the measurement head (11) being arranged in an aperture of the beam guide (6), and **in that** the measurement head (11) which is fitted in the beam guide (6) or which is arranged in an aperture of the beam guide (6), together with a control and evaluation unit (12) which is connected to a laser generator (2) of the laser processing machine, which laser generator produces the laser beam which is modulated in terms of the power thereof, forms means for examining the gas atmosphere in the beam guide (6), the control and evaluation unit (12) having means for modulating the laser power of the laser generator (2) so that, by means of the measurement head (11) which is integrated in the beam guide (6), the photoacoustic effect in the beam guide (6) can be detected owing to the power change.

2. Laser processing machine according to claim 1, **characterised in that** the control and evaluation device (12) is connected to a machine control system (13) of the laser processing machine.

3. Laser processing machine according to either of the preceding claims, **characterised in that** the measurement head (11) is formed by a microphone.

4. Laser processing machine according to any one of the preceding claims, **characterised in that** the measurement head (11) produces an output signal which the control and evaluation unit (12) considers at laser modulation frequency.

## Revendications

1. Machine d'usinage au laser destinée à l'usinage de pièces (7), comprenant un générateur laser (2) générant un faisceau laser, un guidage de faisceau (6) contenant une atmosphère gazeuse pour un faisceau laser (5) servant à l'usinage de pièces ainsi qu'un dispositif (« dispositif d'analyse ») pour analyser l'atmosphère gazeuse dans le guidage de faisceau (6) à l'aide de l'effet photoacoustique afin de détecter la présence d'impuretés, le dispositif d'analyse comprenant une chambre de mesure qui contient de l'atmosphère gazeuse du guidage de faisceau (6) ainsi qu'un faisceau laser modulé en puissance et le dispositif d'analyse présentant en outre une tête de mesure (11) au moyen de laquelle l'effet photoacoustique dans la chambre de mesure peut être détecté, **caractérisée en ce que** le guidage de faisceau (6) est prévu comme chambre de mesure et contient le faisceau laser modulé en puissance, que la tête de mesure (11) est intégrée dans le guidage de faisceau (6), la tête de mesure (11) étant incorporée dans le guidage de faisceau (6) ou la tête de mesure (11) étant disposée dans une fenêtre du guidage de faisceau (6), et que la tête de mesure (11) incorporée dans le guidage de faisceau (6) ou disposée dans une fenêtre du guidage de faisceau (6) forme en commun avec une unité de commande et d'évaluation (12), qui est reliée à un générateur laser (2) générant le faisceau laser modulé en puissance de la machine d'usinage au laser, des moyens pour analyser l'atmosphère gazeuse dans le guidage de faisceau (6), l'unité de commande et d'évaluation (12) présentant des moyens pour moduler la puissance laser du générateur laser (2), de sorte que l'effet photoacoustique dans le guidage de faisceau (6) peut être détecté sur la base de la variation de puissance au moyen de la tête de mesure (11) intégrée dans le guidage de faisceau (6).

2. Machine d'usinage au laser selon la revendication 1, **caractérisée en ce que** l'unité de commande et d'évaluation (12) est en communication avec une commande de machine (13) de la machine d'usinage au laser.

3. Machine d'usinage au laser selon l'une des revendications précédentes, **caractérisée en ce que** la tête de mesure (11) est formée par un microphone.

4. Machine d'usinage au laser selon l'une des revendications précédentes, **caractérisée en ce que** la tête de mesure (11) génère un signal de sortie que l'unité de commande et d'évaluation (12) observe à la fréquence de modulation du laser.
